(19) Europäisches Patentamt
European Patent Office
Office européen des brevets

(11) EP 3 738 747 A1

(12) EUROPEAN PATENT APPLICATION

(43) Date of publication:
**18.11.2020 Bulletin 2020/47**

(21) Application number: **19174141.2**

(22) Date of filing: **13.05.2019**

(51) Int Cl.:
***B29C 64/118*** *(2017.01)* ***B33Y 30/00*** *(2015.01)*
***B33Y 70/00*** *(2020.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventors:
- **Poeller, Sascha**
  **40589 Düsseldorf (DE)**
- **Schiel, Manuel**
  **40219 Düsseldorf (DE)**
- **Rossberg, Tanja**
  **42781 Haan (DE)**
- **Ferencz, Andreas**
  **40223 Düsseldorf (DE)**

(74) Representative: **Viering, Jentschura & Partner mbB**
**Patent- und Rechtsanwälte**
**Hamborner Straße 53**
**40472 Düsseldorf (DE)**

# (54) CONTACTLESS 3D PRINTING METHOD

(57) The present invention lies in the field of 3D printing methods. In particular, the invention relates to 3D printing methods for the production of a 3D part in a layer-by-layer manner, wherein the method comprises providing a carrier substrate to support the three-dimensional part and a print head connected to a reservoir of a printable composition; printing the printable composition with the print head in form of extrudate strands onto the carrier substrate, wherein the distance of the print head orifice to the carrier substrate is equal to or greater than the thickness of the printed extrudate strand, to form a first layer; printing the printable composition with the print head in form of extrudate strand onto the first layer, wherein the distance of the print head orifice to the first layer is equal to or greater than the thickness of the printed extrudate strand, to form a second layer; and optionally repeating the last step at least once to form a third or subsequent layer.



Printed by Jouve, 75001 PARIS (FR)

## Description

The present invention lies in the field of 3D printing methods. In particular, the invention relates to 3D printing methods for the production of a 3D part in a layer-by-layer manner, wherein pasty 3D printing compositions are used.

In 3D printing applications, also referred herein as additive manufacturing, a wide variety of polymeric materials are used. In various of these applications, three-dimensional objects are formed in a layer-by-layer manner, i.e. by repeatedly printing material layers on top of each other to form the desired object. Many of the existing polymeric compositions for 3D printing are liquid or are liquefied for the actual printing, for example by melting, and become solid after being printed, for example in form of filaments.

In 3D printing applications that are used for forming objects in a layer-by-layer manner, one drawback is that printing a layer on top of an already printed layer may create shear stress in the underlying layer or the interlayer contact area that can cause deformation of the object. This problem is particularly pronounced if the curing/hardening of the printed materials is so slow that the underlying layers are not completely cured/hardened at the time the next layer is printed on top of them and in case the printed materials are highly viscous.

While it is desirable to provide polymeric 3D printing materials with elastomeric properties, the use of such materials has inter alia been hampered by the above problems.

The present invention solves these issues by providing a method for additive manufacturing that is contactless in that the print head for printing the layers is distanced from the underlying layer during the printing process such that shear stress on the extrudate strands of the newly printed layer is minimized.

In a first aspect, the present invention relates to a method for additive manufacturing a three-dimensional part in a layer-by-layer manner, wherein the method comprises

(i) providing a carrier substrate to support the three-dimensional part and a print head connected to a reservoir of a printable composition;

(ii) printing the printable composition with the print head in form of extrudate strands onto the carrier substrate, wherein the distance of the print head orifice to the carrier substrate is equal to or greater than the thickness of the printed extrudate strand, to form a first layer;

(iii) printing the printable composition with the print head in form of extrudate strand onto the first layer, wherein the distance of the print head orifice to the first layer is equal to or greater than the thickness of the printed extrudate strand, to form a second layer; and

(iv) optionally repeating step (iii) at least once to form a third or subsequent layer.

In another aspect, the invention also relates to the three-dimensional articles manufactured by use of the methods described herein.

"Additive manufacturing" and "3D printing" are used interchangeably herein to refer to methods for the formation of three-dimensional objects or parts in which material is joined or solidified, typically under computer control, with material being added together in a layer-by-layer manner.

"Layer-by-layer", as used herein, relates to a method of additive manufacturing in which an object is produced by printing separate layers on top of each other such that they form the desired shape. It is typically important to achieve sufficient inter-layer adhesion to produce a stable three-dimensional object.

"Print head", as used herein, relates to the part of an apparatus used for depositing the printing material in form of a layer onto a support or an already formed layer. The print head is typically freely movable to allow formation of layers in the desired shape on a substrate (typically by horizontal movement) and print layers on top of already existing layers (typically be retracting the print head in the vertical direction such that the distance to the substrate or printed layer is adjusted to be suitable for printing the next layer). Alternatively, the print head may be fixed and the substrate is moved relative to the print head or both are movable relative to each other. The print head has typically at least one orifice through which the printable material is deposited. Herein, the printable material is preferably in form of a pasty polymeric composition, so that the print head orifice can resemble an extruder die and the printed material be in form of an extrudate strand. Also reference is made herein to a "print head orifice", it is understood that this term also includes embodiments where the print head has more than one opening/orifice.

"Extrudate strand", as used herein, relates to the form of the printed/extruded material once it leaves the print heads orifice and forms the layer. It is in form of a strand that extends in the direction of the movement of the print head. Strands printed next to each other, for example parallel to each other, can together form one layer (for this they may fuse to a certain extent), while strands printed on top of an existing strand form the next layer in the layer-by-layer manufacturing process.

A "composition" is understood in the context of the present invention as a mixture of at least two ingredients.

The term "curable" is to be understood to mean that, under the influence of external conditions, in particular under the influence of radiation and/or moisture present in the environment and/or supplied for the purpose, the composition can pass from a relatively flexible state, optionally possessing plastic ductility, to a harder state. In general, the crosslinking can take place by means of chemical and/or physical influences, for example, by the supply of energy in the form of heat, light or other electromagnetic radiation, but also by simply bringing the composition into contact with air, atmospheric moisture, water, or a reactive component. "Radiation curable", as used herein, thus relates to curing under the influence, e.g. exposure, to radiation, such as electromagnetic radiation, in particular UV radiation or visible light. UV radiation is in the range of 100 to 400 nanometers (nm). Visible light is in the range of 400 to 780 nanometers (nm). "Moisture-curable", as used herein, thus relates to curing under the influence of moisture, typically humidity from the surrounding air. "Heat-curable", as used herein, thus relates to curing under the influence of heat, typically by heating the three-dimensional part in an oven to temperatures above 100°C.

Provided reference is made to molecular weights of oligomers or polymers in the present application, the quantities, unless otherwise stated, refer to the number average, i.e., the $M_n$ value, and not to the weight average molecular weight. The number average molecular weight $M_n$, as well as the weight average molecular weight $M_w$, is determined according to the present invention by gel permeation chromatography (GPC, also known as SEC) at 23°C using a styrene standard. The molecular weight can be determined by gel permeation chromatography (GPC) with tetrahydrofuran (THF) as the eluent according to DIN 55672-1:2007-08, preferably at 23°C or 35°C. Molecular weights of monomeric compounds are calculated based on the respective molecular formula and the known molecular weights of the individual atoms. These methods are known to one skilled in the art.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in a composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"Consisting essentially of", as used herein, means that the respective composition is composed mainly, i.e. by at least 50% by weight, for example at least 60, 70 or 80 %, of the referenced component(s), as described below.

The invention relates to methods for additive manufacturing a three-dimensional part in a layer-by-layer manner, wherein the method comprises, in a first step, providing a carrier substrate to support the three-dimensional part and a print head connected to a reservoir of a printable composition. The carrier substrate may be any suitable substrate. It may be a printing bed that may be flat, essentially flat or curved. It can be made of any suitable material and can also be in form of a tray. In various embodiments, it can be made of metal, glass or plastic. It is preferably designed such that it allows easy release of the layers printed thereon, e.g. being inert towards the printed material and any potential curing process used.

In various embodiments, the print head forms part of a printing apparatus and is connected to at least one reservoir of at least one printable composition. While the print head may, in various embodiments, be connected to multiple reservoirs of different printable compositions, it is herein preferred that the print head is connected to one reservoir of one printable composition. The print head is that part of the printing apparatus that deposits the printing material onto the substrate or an already formed layer in the desired pattern. To achieve this, it is connected to a feeding means through which the print head is fed with the printable composition, such as a pump, conveyor and the like, via tubing/pipes. The print head has an orifice or nozzle through which the printable composition leaves the print head and is deposited on a surface. The orifice/nozzle may have any desired shape, but is typically an essentially circular opening. The shape of the print head and the print head orifice may define the shape of the printed material strand. In various embodiments, the print head and/or its orifice are designed such that due to the shear forces that act on the printable composition during transport and extrusion/printing, the viscosity is lowered to such a degree that the composition is printable with the selected device but increases once the layer has been formed such that the formed object retains its form even before curing is completed. The printing method may include heating the composition and/or the printhead. Typical composition temperatures for printing/extrusion range from about 10°C to about 120°C, typically from about 20 to about 100°C. In some embodiments, temperatures in the range of 20 to 40 or 55 to 85°C may be preferred. These conditions particularly apply to the compositions described in more detail below.

The reservoir may be a cartridge, tank or similar storage container in which the printable composition is stored and which is connected to the print head with a suitable feeding line, tubing or the like. The transport of the printable material may be facilitated by a transporting device, such as a pump or conveyor screw, all of which are known in the field.

The print head is designed such that it allows printing the printable composition with the print head in form of extrudate strands onto the carrier substrate to form a first layer in the next step of the inventive method. For this, as already described above, the print head, the carrier substrate or both may be movable. Typically, the print head is moved over the carrier substrate and extrudate strands are deposited onto the substrate in the desired pattern. The layers are formed by depositing strands next to each other. Once the first layer is formed, the method continues by printing the printable composition with the print head in form of extrudate strand onto the first layer to form a second layer. The

second layer may be similar to or different in shape relative to the first layer but is formed on top of the first layer. To form the three-dimensional object, the steps of forming a layer on top of the already formed layers may be repeated to form a third, fourth, fifth and subsequent layer. Computer programs exist that allow to devise a layer-by-layer printing process for a given shape or object.

In the methods of the invention, the distance of the print head orifice to the carrier substrate or the already formed layers is equal to or greater than the thickness of the printed extrudate strand. In preferred embodiments, it is greater than the thickness of the printed extrudate strand. In various embodiments, the ratio of the distance of the print head orifice to the carrier substrate or the already formed layers during printing to the thickness of the printed extrudate strand ranges from 1.0 to 3.0, preferably 1.0 to 2.0, more preferably 1.1 to 1.8. Keeping said distance of the print head to the substrate or already printed layer ensures that shear stress on the already formed layers is minimized. As a result, deformation of the formed layers can be avoided.

In various embodiments, the printable composition is a reactive composition and is curable. In such embodiments, the method further includes the step of curing the printed layers. The curing may occur directly after printing, i.e. separately for each strand/layer, after more than one layer or after the complete object has been formed or a combination of these, i.e. curing of layer directly after printing and curing after multiple layers and/or the whole object have/has been formed. The curing may occur simultaneously to the printing, for example in that the printed extrudate strands are exposed to radiation or moisture or heat or any other curing mechanism directly after they left the print head orifice or once they have been deposited on the substrate or an underlying layer. It is also possible that curing is achieved by a hardener composition, with said hardener composition being combined with the to-be-cured composition in the print head or in the apparatus before being fed to the print head.

In various embodiments, the curing mechanism is selected from UV irradiation, moisture, heat or combinations thereof. Dual curable compositions, such as radiation/moisture and radiation/heat curable compositions may be preferred.

The printable compositions are preferably polymer-based compositions, i.e. one essential component is a polymer. "Essential component", as used in this context, means that said component forms at least 25 wt.-% of the respective composition, preferably at least 40 wt.-%, more preferably at least 50 wt.-%. In various embodiments, the printable composition comprises a polymer base material selected from the group consisting of epoxides, polyurethanes, acrylates, silanes, silane-modified polymers (SMPs) and combinations thereof. More concrete examples of such polymeric compositions are described below.

In preferred embodiments of the invention, the printable composition is in form of a printable paste. "Paste" and "pasty", as used herein, relate to liquid compositions as described in more detail herein. The pastes are preferably shear-thinning and/or thixotropic liquids, i.e. their viscosity is decreased when subjected to shear forces. The pastes typically have a yield point, i.e. at room temperature (20°C) and standard pressure (1013 mbar) they substantially do not flow or creep as long as there are no external forces applied, such as shear forces. Such a yield point ensures that the material once extruded to form a 3D object is stable enough to maintain the form until curing is completed.

The decrease in viscosity upon application of shear stress is such that they are printable/extrudable by 3D printing apparatuses and print heads, as described herein. This may, for example, mean that when subjected to shear forces the ratio of the viscosity of the composition at a shear rate of 1/s to the viscosity at a shear rate of 5/s at 25°C is at least 2.0, preferably 2.5 or more, more preferably 3.0 or more. In various embodiments, the printable compositions of the invention show shear-thinning/thixotropic behaviour when subjected to shear forces such that the ratio of the viscosity of the composition at a shear rate of 1/s to the viscosity at a shear rate of 10/s at 25°C is at least 2, preferably 4.0 or more, more preferably 5.0 or more. In various embodiments, the compositions of the invention show shear-thinning/thixotropic behaviour when subjected to shear forces such that the ratio of the viscosity of the composition at a shear rate of 1/s to the viscosity at a shear rate of 40/s at 25°C is at least 5.0, preferably 7.0 or more, more preferably 10.0 or more. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,25mm, F=0N, under nitrogen, 25°C, Shear rate 0.3-40$s^{-1}$. For extrapolation Casson's model is used.

While there is principally no upper limit, it may be preferred that the shear-thinning/thixotropic properties are not such that the ratio of the viscosity of the composition at a shear rate of 1/s to the viscosity at a shear rate of 10/s at 25°C exceeds 100, preferably not exceeds 50, more preferably not exceeds 30.

It may furthermore be a property of the printable compositions used in accordance with the invention that they have a yield stress (Casson yield stress (value)) of greater than 25, preferably 50 or more, more preferably 75 or more. Even more preferred are values exceeding 100, exceeding 150 or exceeding 200. These values refer to the respective values at 25°C.

The yield stress can be calculated using the formula:

$$\tau^{\frac{1}{2}} = k_{oc}^{\frac{1}{2}} + k_{c}^{\frac{1}{2}}\gamma^{\frac{1}{2}}$$

Wherein $\tau$ is the shear stress, $k_{oc}$ is the Casson yield stress, $k_c$ is the Casson plastic viscosity and $\gamma$ is the shear rate. In a graphic representation of the square root of $\tau$ (shear stress) against the square root of $\gamma$ (shear rate), the square root of $k_c$ is thus the slope and the square root of $k_{oc}$ the intercept. Shear rate and shear stress are measured/determined using BS EN ISO 3219:1995. Specifically, the measuring conditions are as follows: Geometry: 25mm plate/plate geometry; Gap: 0,25mm, F=0N, under nitrogen, 25°C, Shear rate 0.3-40$s^{-1}$. For extrapolation Casson's model can be used.

The plastic viscosity preferably ranges between 1 and 30.

The desired rheological properties of the compositions can be controlled via the amounts of components, e.g. as defined below, in particular the type and amounts of fillers used.

As described above, the printable compositions may be polymeric compositions that comprise at least one polymer selected from the group of epoxides, acrylates, polyurethanes, silanes, silane-modified polymers and combinations thereof, including hybrid polymers.

*Epoxides*

In various embodiments, the polymeric compositions comprise epoxides or are based on epoxides.

As a first component an epoxy-based reactive polymeric composition comprises at least one epoxy resin. A large number of polyepoxides which have at least two 1,2-epoxy groups per molecule are suitable as epoxy resins. The epoxy equivalent of said polyepoxides may vary between 100 g/mol and 50000 g/mol, preferably between 110 g/mol and 5000 g/mol, more preferably between 130 g/mol and 2000 g/mol. The epoxy equivalent can be determined according to DIN 16945.The polyepoxides may in principle be saturated, unsaturated, cyclic or acyclic, aliphatic, alicyclic, aromatic or heterocyclic polyepoxide compounds.

Examples of suitable polyepoxides include the polyglycidyl ethers, which are prepared by reacting epichlorohydrin or epibromohydrin with a polyol, like polyphenol in the presence of alkali. Polyphenols suitable for this are for example resorcinol, catechol, hydroquinone, bisphenol A (bis-(4-hydroxyphenyl)-2,2-propane)), bisphenol F (bis-(4-hydroxyphenyl)methane), bis-(4-hydroxyphenyl)-1,1-isobutane, 4,4'-dihydroxybenzophenone, bis-(4-hydroxyphenyl)-1,1-ethane, 1,5-hydroxynaphthalene. Other suitable polyphenols as a basis for the polyglycidyl ethers are the known condensation products of phenol and formaldehyde or acetaldehyde of the novolac resin type. Further polyepoxides which are suitable in principle are the polyglycidyl ethers of polyalcohols or diamines. These polyglycidyl ethers are derived from polyalcohols such as ethylene glycol, diethylene glycol, triethylene glycol, 1,2-propylene glycol, 1,4-butylene glycol, triethylene glycol, 1,5-pentanediol, 1,6-hexanediol or trimethylolpropane. Further polyepoxides are polyglycidyl esters of polycarboxylic acids, for example reaction products of glycidol or epichlorohydrin with aliphatic or aromatic polycarboxylic acids such as oxalic acid, succinic acid, glutaric acid, terephthalic acid or dimer fatty acid. Further epoxides may be derived from the epoxidation products of olefinically unsaturated cycloaliphatic compounds or from natural oils and fats.

In one embodiment, aliphatic epoxy resins, especially cycloaliphatic epoxy resins are preferred. Aliphatic epoxy resin, which include cyclic or acyclic resins, are especially preferred for application temperatures in the range of 15 to 40°C, with cycloaliphatic epoxy resins are particularly preferred under such circumstances. In preferred embodiments, the epoxy polymeric composition comprises at least one epoxy resin containing at least two 3,4-epoxycyclohexane groups, such as (3',4'-epoxycyclohexane)methyl-3,4-epoxycyclohexylcarboxylate and (3',4'-epoxycyclohexane)methyl-3,4-epoxycyclohexylcarboxylate modified epsilon-caprolactone.

In another embodiment, the printable composition contains at least one aromatic epoxy resin, preferably selected from epoxy resins based on bisphenol or epoxy resins based on novolac resins, in particular phenol-formaldehyde resins, or mixtures thereof. In a preferred embodiment the pasty composition includes at least one epoxy resin based on Bisphenol A and/or Bisphenol F. These aromatic epoxy resins are especially preferred for application temperatures in the range from 40 to 80°C.

Typically, the amount of the at least one epoxy resin in a polymeric composition based on such resins is in the range from 2 to 50 % by weight of the entire printable composition, preferably 5 to 45 % by weight, in particular 10 to 40 % by weight, particularly preferably 15 to 35 -% by weight.

Additionally, the printable epoxy composition may contain at least one monomer and/or prepolymer that is polymerizable by exposure to radiation. The monomers and/or prepolymers polymerizable by exposure to radiation are those comprising reactive end groups selected from the group consisting of acrylates, methacrylates, alpha-olefins, N-vinyls, acrylamides, methacrylamides, styrenics, 1,3-dienes, vinyl halides, acrylonitriles, vinyl esters, maleimides, and vinyl ethers. Preferably the monomers and/or prepolymers polymerizable by exposure to radiation contain a carbon-carbon double bond. In the most preferred embodiment the monomer and/or prepolymer that is polymerizable by exposure to radiation is selected from the group of acrylates and/or methacrylates (herein also described as (meth)acrylates), including poly(meth)acylates, such as low-molecular-weight poly(meth)acrylates.

"Poly(meth)acrylate" shall be understood to mean a compound that comprises at least two acrylate groups. "Low-molecular-weight", as used in this context, shall be understood to refer to a compound that has a molecular weight of less than 2400 g/mol, and preferably less than 800 g/mol. Monomers and/or prepolymers polymerizable by exposure to radiation comprising two, three or more acrylate groups per molecule may be advantageous under certain circumstances, for example a combination of di- and tri(meth)acrylates.

Exemplary difunctional (meth)acrylates include, without limitation, ethylene glycol dimethacrylate, diethylene glycol dimethacrylate, triethylene glycol dimethacrylate, triethylene glycol diacrylate, tripropylene glycol dimethacrylate, 1,4-butanediol dimethacrylate, 1,3-butylene glycol dimethacrylate, 1,3-butanediol dimethacrylate, tricyclodecane dimethanol dimethacrylate, 1,10-dodecanediol dimethacrylate, 1,6-hexanediol dimethacrylate, 2-methyl-1,8-octanediol dimethacrylate, 1,9-nonanediol dimethacrylate, neopentyl glycol dimethacrylate and polybutylene glycol dimethacrylate. Difunctional (meth)acrylates based on a phenol structure, like bisphenol, are also suitable. Especially preferred are epoxylated bisphenol A and/or F di(meth)acrylates.

Exemplary (meth)acrylates comprising three or more acrylate groups include, without limitation, glycerol triacrylate, dipentaerythritol hexaacrylate, pentaerythritol triacrylate (TMM), tetramethylolmethane tetraacrylate (TMMT), trimethylolpropane triacrylate (TMPTA), pentaerythritol tetraacrylate, di(trimethylolpropane) tetraacrylate (TMPA), pentaerythritol tetraacrylate, trimethylolpropane trimethacrylate (TMPTMA), tri(2-acryloxyethyl) isocyanurate and tri(2-methacryloxyethyl) trimellitate.

Printable compositions comprising at least one poly(meth)acrylate selected from triethylene glycol diacrylate, triethylene glycol dimethacrylate, difunctional (meth)acylate based on a phenol structure, especially epoxylated bisphenol A diacylate, trimethylolpropane triacrylate (TMPTA) and trimethylolpropane trimethacrylate (TMPTMA), pentaerythritol triacrylate (TMM), tetramethylolmethane tetraacrylate (TMMT), pentaerythritol trimethacrylate, di(trimethylolpropane) tetraacrylate (TMPA) and pentaerythritol tetraacrylate can be preferred.

In various embodiments, the at least one monomer and/or prepolymer that is polymerizable by exposure to radiation, preferably a poly(meth)acrylate, is comprised in an amount of 1 to 30 wt.%, preferably 5 to 20 wt.%, based on the total weight of the printable epoxy composition.

Furthermore, the epoxy reactive compositions may comprise at least one photoinitiator, as described below. The epoxy compositions contain the photoinitiators preferably in an amount of from about 0.01 to 5.0 % by weight, preferably 0.1 to 4.0 % by weight, more preferably 0.5 to 3 % by weight, based in each case on the total weight of the composition. If a mixture of different photoinitiators is used, the amounts refer to the total amount in the composition.

In various embodiments, the printable epoxy composition may further comprise an epoxy curing catalyst. Suitable epoxy curing catalysts are well-known in the art and include cationic curing catalysts and latent curing catalysts.

The cationic curing catalysts may be one of the catalysts commonly used for the cationic polymerizations including onium salts with anions of low nucleophility, such as ammonium salts, halonium salts, iodonium salts, sulfonium salts, sulfoxonium salts or diazonium salts. Suitable anions include for example hexafluoroantimonate, hexafluorophosphate or tetrakis(pentafluorophenyl) borate. Preferred are sulfonium and iodonium salts, wherein the counter ion is selected from hexafluoroantimonate, hexafluorophosphate and tetrakis(penta fluoro aryl) borates, especially triaryl sulfonium and bis (alkylphenyl) iodonium salts with hexafluoroantimonate as a counter ion, particularly preferably Triarylsulfonium hexafluoroantimonate salts. Especially preferred are cationic curing catalysts based on hexafluoroantimonate. These cationic curing catalysts are preferably combined with an aliphatic, especially cycloaliphatic epoxy resin.

The epoxy compositions may contain the cationic curing catalyst preferably in an amount of from about 0.01 to 5.0 % by weight, preferably 0.1 to 4.0 % by weight, more preferably 0.5 to 2 % by weight, based in each case on the total weight of the composition.

In some embodiments, the epoxy composition comprises a latent hardener as epoxy curing catalyst, especially in combination with aromatic epoxy resins. As heat-activatable or latent curing catalyst for the epoxy resin use may be made of guanidines, substituted guanidines, substituted ureas, melamine resins, guanamine derivatives, cyclic tertiary amines, aromatic amines and/or mixtures thereof. The curing agents may be stoichiometrically included in the curing reaction. However, they may also be catalytically active. Examples of substituted guanidines are methyl guanidine, dimethyl guanidine, trimethyl guanidine, tetramethyl guanidine, methyl isobiguanidine, dimethyl isobiguanidine, tetramethyl isobiguanidine, hexamethyl isobiguanidine, heptamethyl isobiguanidine and, most particularly, cyanoguanidine (dicyanodiamide). As representatives of suitable guanamine derivatives, mention may be made of alkylated benzoguanamine resins, benzoguanamine resins or methoxymethyl ethoxymethyl benzoguanamine. Dicyandiamide is particularly suitable.

The epoxy compositions may contain the latent curing catalyst preferably in an amount of from about 0.01 to 10 % by weight, preferably 1 to 8 % by weight, more preferably 2 to 7 % by weight, based in each case on the total weight of the composition.

In addition to or instead of the aforementioned curing catalyst, use may be made of catalytically active substituted ureas. These are, in particular, p-chlorophenyl-N,N-dimethyl urea (Monuron), 3-phenyl-1,1-dimethyl urea (Fenuron) or 3,4-dichlorophenyl-N,N-dimethyl urea (Diuron). In principle, use may also be made of catalytically active tertiary acryl- or alkylamines, such as for example benzyl dimethyl amine, tris(dimethylamino)phenol, piperidine or piperidine derivatives. Furthermore, use may also be made of various, preferably solid, imidazole derivatives as catalytically active accelerators. As representatives, mention may be made of 2-ethyl-2-methylimidazole, N-butylimidazole, benzimidazole and N-C1-12-alkylimidazoles or N-arylimidazoles. Particular preference is given to the use of a combination of curing agent and accelerator in the form of so-called accelerated dicyandiamides in finely ground form. Especially preferred is a combination of dicyandiamide and fenuron.

In some embodiments, the printable composition may contain additionally a dual reactive compound. In general, such a dual reactive compound comprises: (i) a first reactive group reactive with the monomers and/or prepolymers that are polymerizable by exposure to radiation, and (ii) a second reactive group reactive with the epoxy resin. One or more of each reactive group may be included. Examples of suitable first reactive groups include, but are not limited to, acrylates, methacrylates, alpha-olefins, N-vinyls, acrylamides, methacrylamides, styrenics, thiols, 1,3- dienes, vinyl halides, acrylonitriles, vinyl esters, maleimides and vinyl ethers. Examples of suitable second reactive groups include, but are not limited to, epoxy, amine, isocyanate, alcohol and anhydride groups.

Thus, particular examples of suitable dual reactive compounds include compounds of the general formula (X)nR(X')m, wherein: X is the first reactive group, X' is the second reactive group, n and m are each integers of from 1 or 2 to 10 or 20, and R is a hydrocarbyl or organic group (e.g., an aromatic, aliphatic, or mixed aromatic and aliphatic group, such as bisphenol A). Particular examples include but are not limited to epoxy acrylates and epoxy methacrylates. In a preferred embodiment, the dual reactive compound, preferably an epoxy (meth)acrylate, is comprised in an amount of 1 to 20 wt.%, preferably 5 to 15 wt.%. based on the total weight of the printable composition.

In various embodiments, the epoxy composition comprises at least one compound having at least one oxetane group, preferably 1 to 4, in particular 1 to 2, particularly preferably exactly two oxetane groups per molecule. "Oxetane group" as used herein refers to a four-membered ring having an oxygen atom. In addition to the oxetane group, these compounds may also have at least one hydroxyl group, preferably 1 to 4, in particular 1 to 2, particularly preferably exactly one hydroxyl group per molecule. The compound having at least one oxetane group is preferably a monomeric compound. The at least one compound having at least one oxetane group preferably has a molecular weight of less than 1000 g / mol, preferably less than 500 g / mol, preferably less than 400 g / mol. Preferred examples of such compounds include tetraphthalate-bisoxetane, and biphenylene-bisoxetane.

In various embodiments, the oxetane is comprised in an amount of 1 to 20 wt.%, preferably 5 to 15 wt.%. based on the total weight of the printable epoxy composition.

In various embodiments, the epoxy composition contains at least one organic hardener copolymerizable with said epoxy resin. Any suitable hardener for epoxy resins may be used. In some embodiments, the hardener is selected from an amine, a polyamine (e.g., an aromatic amine or polyamine, a cycloaliphatic amine or polyamine, an aliphatic amine or polyamine such as a polyether amine), an acid, polyacid (i.e. polycarboxylic acids), an anhydride, an alcohol, an polyol, a thiol or a polythiol. Especially preferred are alcohols and polyols, in particular containing primary hydroxyl groups. These preferably have a functionality of at least 1, preferably at least 2, are preferably free from groups that can inhibit the curing reaction and preferably only contain OH groups as reactive groups. The alcohol can be aliphatic or aromatic compounds. Examples are polyester polyols, polyether polyols and polyester/polyether polyols, hydroxyl-functionalized polybutadienes, polycaprolactone diols or triols, and ethylene/butylene polyols. The used alcohols, preferably polyols used as hardener may have a number-average molecular weight of 200 to 5000, preferably 300 to 2500 g/mol (determinable by means of GPC against a polystyrene standard).

In various embodiments, the organic hardener, preferably a polyol, is comprised in an amount of 1 to 20 wt.%, preferably 5 to 15 wt.%. based on the total weight of the printable composition.

The epoxides are radiation curable and preferably dual curable, such as heat and radiation curable, as defined above.

The printable epoxy compositions preferably have a viscosity factor (1,5/15) at application temperature of at least 2.0, preferably at least 3.0, more preferably 4.0 or more. Such a viscosity factor (1,5/15) ensures that the material once extruded to form a 3D object is stable enough to maintain the form until curing is completed. The viscosity factor (x/y) is the viscosity ratio of the viscosity of the composition at a shear rate of x/s to the viscosity at a shear rate of y/s at application temperature. Therefore, the viscosity factor (1,5/15) is the viscosity of the composition at a shear rate of 1,5/s divided by the viscosity at a shear rate of 15/s. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,2mm, F=0N, under nitrogen, 25°C, Shear rate 0.3 to 40 1/s. To determine the viscosity factor (1,5/15) the formulation is kept for 30 sec under constant shear of $1.5s^{-1}$, followed by 30 sec of constant shear with $15s^{-1}$, both in rotation mode. The viscosity factor (1,5/15) is determined by dividing the two plateau values of the viscosities at the two shear rates. The other

viscosity factors can be determined accordingly.

In various embodiments, the printable compositions have a viscosity factor (1,5/15) at a temperature in the range of 15°C to 40°C, preferably 20°C to 30°C, more preferably at 25°C of at least 2.0, preferably at least 3.0, more preferably 4.0 or more. In other embodiments, the printable compositions have a viscosity factor (1,5/15) at a temperature in the range of 40°C to 80°C, preferably 45°C to 60°C, more preferably at 55°C of at least 2.0, preferably at least 3.0, more preferably 4.0 or more.

In other embodiments, the pasty epoxy composition has also a viscosity factor (5/50) at application temperature, preferably at 25°C or 55°C, of at least 1.5, preferably at least 2.0, more preferably at least 3.0. Pasty epoxy compositions which have the desired value of this additional second viscosity factor (5/50) show a beneficial thixotropic behaviour. Especially preferred are compositions with a viscosity factor (1,5/15) greater than the viscosity factor (5/50) at application temperature, preferably at 25°C or at 55°C.

While there is principally no upper limit, it may be preferred that the viscosity factor (1,5/15) and/or the viscosity factor (5/50) at the mentioned application temperature do not exceed 100, preferably 50, more preferably 30.

In preferred embodiments, the pasty epoxy composition has a viscosity at a shear rate of 1,5/s of at least 10 Pas, preferably at least 20 Pas, more preferably at least 30 Pas. In other embodiments, the pasty epoxy composition has a viscosity at a shear rate of 1,5/s of at most 2000 Pas, preferably at most 1500 Pas, more preferably at most 1300 Pas. Preferably the pasty epoxy composition has a viscosity at a shear rate of 1,5/s in the range from 10 to 2000 Pas, preferably from 20 to 1500 Pas, more preferably from 30 to 1300 Pas.

It is understood that the above viscosity factors that are, in various embodiments, preferred for the epoxy compositions disclosed herein may, in certain embodiments, replace the more general shear-thinning/thixotropy and yield stress definitions above. In other embodiments, all rheology requirements set out herein are satisfied by the epoxy compositions.

*Acrylates*

In various embodiments, the polymeric compositions comprise acrylates or are based on acrylates.

"Acrylates", as used in this context, relates to polymers that have a poly(meth)acrylic acid (ester) backbone, i.e. that result from polymerization of acrylic acid (esters) and/or methacrylic acid (esters), typically C1-C10 alkyl esters thereof.

The acrylates are radiation curable in that they comprise at least one radiation curable group, as described herein.

*Polyurethanes*

In various embodiments, the polymeric compositions comprise polyurethanes or are based on polyurethanes.

A "polyurethane" is understood to be a polymer which has at least two urethane groups -NH-C(=O)-O-in the main chain. Polyurethanes may be obtainable by reacting at least i) a polyol or a mixture of two or more polyols and ii) a polyisocyanate or a mixture of two or more polyisocyanates.

As first component such polyurethane compositions comprise at least one polyisocyanate.

A "polyisocyanate" is understood to be a compound which has at least two isocyanate groups -NCO. This compound does not have to be a polymer, and instead is frequently a low molecular compound.

The polyisocyanates suitable for preparing the polyurethanes include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H12-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates.

Other polyisocyanates suitable include isocyanates with a functionality of three or more obtainable, for example, by oligomerization of diisocyanates, more particularly by oligomerization of the isocyanates mentioned above. Examples

of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

The polyisocyanate is preferably an aliphatic polyisocyanate, more preferably a polyisocyanate based on or being hexamethylene diisocyanate.

Typically, the amount of the at least one polyisocyanate is in the range from 2 to 50 % by weight of the printable composition, preferably 5 to 45 % by weight, in particular 10 to 40 % by weight, particularly preferably 15 to 30 -% by weight.

In various embodiments, the polyisocyanate described above is combined with a compound having NCO-reactive groups, such as amine or hydroxy groups. In various embodiments, these compounds are polyols, as defined below, such as polyether polyols, polyester polyols, polycarbonates and the like. If reacted with a molar excess of NCO groups relate to the NCO-reactive groups present in these compounds, NCO-terminated polyurethane compounds, such as (pre)polymers are obtained.

For polyurethane synthesis, there may thus be a stoichiometric excess of NCO groups of the polyisocyanates with respect to the hydroxy groups of the polyols, "the polyols" and "the polyisocyanates" in each case also encompassing the presence of only one polyol and/or only one polyisocyanate. This stoichiometric excess must exist under the process conditions; i.e., it is not sufficient when the excess is nominally present, but a portion of the NCO groups of the polyisocyanates reacts with reactants other than the OH groups of the polyols, for example with monofunctional alcohols, so that there is a de facto shortage of NCO groups of the polyisocyanates with respect to the OH groups of the polyols. The ratio of the number of OH groups of the polyols to the number of NCO groups of the polyisocyanates is particularly preferably 1:3 to 1:1.1, in particular 1:2.5 to 1:1.5.

The afore-mentioned polyurethanes synthesized may be used as a basis of the polyurethane compositions described herein. In various embodiments, these polyurethanes of the invention make up 2 to 50 % by weight of the printable composition, preferably 5 to 45 % by weight, in particular 10 to 40 % by weight, particularly preferably 15 to 30 -% by weight. It is understood that the compositions then contain these polyurethanes and only residual amounts of the polyisocyanates.

In various embodiments, the polyurethane compositions contain at least one polyol. As defined below, "polyol" is understood to be a compound which contains at least two OH groups, irrespective or whether the compound contains other functional groups. However, a polyol used in accordance with this definition preferably contains only OH groups as functional groups or, if other functional groups are present, none of these other functional groups is reactive at least to isocyanates under the conditions prevailing during the reaction of the polyol(s) and polyisocyanate(s).

The polyols suitable generally include polyether polyols, polyester polyols, polycarbonates and the like, but are preferably polyether and/or polyester polyols. The polyether polyol is preferably a polyalkylene oxide, particularly preferably polyethylene oxide and/or polypropylene oxide. The number average molecular weight Mn of suitable polyethers and/or polyesters on which the polymer is based is preferably 200 to 30000 g/mol.

The polyols to be used may have an OH value of preferably about 5 to about 15 and, more preferably, of about 10. The percentage content of primary OH groups should be below about 20%, based on all the OH groups, and is preferably below 15%. In one particularly advantageous embodiment, the acid value of the polyethers used is below about 0.1, preferably below 0.05 and, more preferably, below 0.02.

Besides the polyethers, a polyol mixture that may contain other polyols can be used. For example, it may contain polyester polyols with a molecular weight of about 200 to about 30,000.

In a preferred embodiment, the polyol, preferably a polyester polyol, is comprised in an amount of 1 to 20 wt.%, preferably 2 to 10 wt.%, based on the total weight of the printable composition.

The polyol may react with the polyisocyanate to form the polyurethane in situ or upon application or may be pre-reacted with the polyisocyanate to yield a polyurethane. In the latter case, the composition may comprise a polyurethane that has been formed by reaction of the polyisocyanate and polyol as described above. It is understood that if the compositions contain such polyurethanes, then the combined amounts listed above for the polyisocyanates and polyols relate to the polyurethanes formed therefrom instead.

Additionally, the printable composition may contain at least one monomer and/or prepolymer that is polymerizable by exposure to radiation. The monomers and/or prepolymers polymerizable by exposure to radiation are those comprising reactive end groups selected from the group consisting of acrylates, methacrylates, alpha-olefins, N-vinyls, acrylamides, methacrylamides, styrenics, 1,3-dienes, vinyl halides, acrylonitriles, vinyl esters, maleimides, and vinyl ethers. Preferably the monomers and/or prepolymers polymerizable by exposure to radiation contain a carbon-carbon double bond. In the most preferred embodiment the monomer and/or prepolymer that is polymerizable by exposure to radiation is selected acrylates and/or methacrylates (herein also described as (meth)acrylates).

In some embodiments, the printable composition comprises a multifunctional (meth)acrylate monomer and/or a monofunctional (meth)acrylate monomer selected from the group consisting of alkyl (meth)acrylate, alkenyl (meth)acrylate and heterocyclic (meth)acrylate, or any combinations of these monomers, wherein the alkyl group has 1 to 20 carbon atoms and it can be further substituted, the alkenyl group has 2 to 20 carbon atoms and it can be further substituted, and the heterocyclic group has 2 to 20 carbon atoms and at least one heteroatom selected from nitrogen and oxygen,

and it can be further substituted, wherein the substituent being at least one independently selected from the group consisting of an alkyl group having 1 to 10 carbon atoms, an alkoxy group having 1 to 10 carbon atoms, an aryloxy group having 6 to 10 carbon atoms, an epoxy group, and a hydroxy group; and amine groups.

Preferably the acrylate can be a polybutadiene containing a (meth)acryloxy group, polyisoprene containing a (meth)acryloxy group, polyurethane containing a (meth)acryloxy group and polyester containing a (meth)acryloxy group, or any combinations thereof. In a preferred embodiment, the monomer and/or prepolymer that is polymerizable by exposure to radiation can be polyurethane containing a (meth)acryloxy group; more preferably an aliphatic polyurethane containing a (meth)acryloxy group.

In a more preferred embodiment, the at least one monomer and/or prepolymer that is polymerizable by exposure to radiation is a dual reactive compound. In general, such a dual reactive compound comprises: (i) a first reactive group polymerizable by exposure to radiation, as mentioned above, and (ii) a second reactive group reactive with the polyisocyanate resin. One or more of each reactive groups may be included. Examples of suitable second reactive groups include, but are not limited to, hydroxyl, amine and thiol groups, preferably hydroxyl groups. Especially preferred are (meth)arcylates with at least one hydroxyl group as dual reactive compound. Examples include hydroxylalkyl(meth)acrylates, preferably with a C1 to C12 alkyl group. Especially preferred is hydroxyethyl(meth)acrylate.

In a preferred embodiment, the at least one monomer and/or prepolymer that is polymerizable by exposure to radiation, preferably a (meth)acrylate, preferably a (meth)acrylate containing at least one hydroxyl group, is comprised in an amount of 1 to 30 wt.%, preferably 5 to 20 wt.%, based on the total weight of the printable composition.

Furthermore, the polyurethane compositions may comprise at least one photoinitiator, as described below. The epoxy compositions contain the photoinitiators preferably in an amount of from about 0.01 to 5.0 % by weight, preferably 0.1 to 4.0 % by weight, more preferably 0.5 to 3 % by weight, based in each case on the total weight of the composition. If a mixture of different photoinitiators is used, the amounts refer to the total amount in the composition.

In various embodiments, the printable polyurethane composition may comprise an isocyanate curing catalyst, especially in case the printable compositions contain a polyol. Suitable isocyanate curing catalysts are well-known in the art and include tin compounds, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di n butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Also suitable are tin compounds of ethyl silicate, dimethyl maleate, diethyl maleate, dioctyl maleate, dimethyl phthalate, diethyl phthalate, dioctyl phthalate, such as, for example, di(n butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n butyl)tin(IV) sulfide, (n-butyl)2Sn(SCH2COO), (n-octyl)2Sn(SCH2COO), (n octyl)2Sn(SCH2CH2COO), (n-octyl)2Sn(SCH2CH2COOCH2CH2OCOCH2S), (n butyl)2-Sn(SCH2COO-i-C8H17)2, (n-octyl)2Sn(SCH2COO-i-C8H17)2, and (n-octyl)2Sn(SCH2COO-n-C8H17)2.

In some embodiments, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

In various embodiments, the tin compound is a dialkyltin(IV) dicarboxylate, particularly dibutyltin dilaurate or dioctyltin dilaurate.

Suitable catalysts for such reactions are also described below as condensation catalysts.

The polyurethane compositions may contain the polyisocyanate catalyst preferably in an amount of from about 0.001 to 1.0 % by weight, preferably 0.01 to 0,5 % by weight, based in each case on the total weight of the composition.

In various embodiments, the polyurethane compositions may have a viscosity factor (1,5/15) at application temperature of at least 2.0, preferably at least 3.0, more preferably 4.0 or more. Such a viscosity factor (1,5/15) ensures that the material once extruded to form a 3D object is stable enough to maintain the form until curing is completed. The viscosity factor (x/y) is the viscosity ratio of the viscosity of the composition at a shear rate of x/s to the viscosity at a shear rate of y/s at application temperature. Therefore, the viscosity factor (1,5/15) is the viscosity of the composition at a shear rate of 1,5/s divided by the viscosity at a shear rate of 15/s. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,2mm, F=0N, under nitrogen, 25°C, Shear rate 0.3 to 40 1/s. To determine the viscosity factor (1,5/15) the formulation is kept for 30 sec under constant shear of 1.5s-1, followed by 30 sec of constant shear with 15s-1, both in rotation mode. The viscosity factor (1,5/15) is determined by dividing the two plateau values of the viscosities at the two

shear rates. The other viscosity factors can be determined accordingly.

In various embodiments, the printable compositions have a viscosity factor (1,5/15) at a temperature in the range of 15°C to 40°C, preferably 20°C to 30°C, more preferably at 25°C of at least 2.0, preferably at least 3.0, more preferably 4.0 or more. In other embodiments, the printable compositions have a viscosity factor (1,5/15) at a temperature in the range of 40°C to 80°C, preferably 45°C to 60°C, more preferably at 55°C of at least 2.0, preferably at least 3.0, more preferably 4.0 or more.

In other embodiments, the pasty polyurethane composition has also a viscosity factor (5/50) at application temperature, preferably at 25°C or 55°C, of at least 1.5, preferably at least 2.0, more preferably at least 3.0. Pasty polyurethane compositions which have the desired value of this additional second viscosity factor (5/50) show a beneficial thixotropic behaviour. Especially preferred are compositions with a viscosity factor (1,5/15) greater than the viscosity factor (5/50) at application temperature, preferably at 25°C or at 55°C.

While there is principally no upper limit, it may be preferred that the viscosity factor (1,5/15) and/or the viscosity factor (5/50) at the mentioned application temperature do not exceed 100, preferably 50, more preferably 30.

In preferred embodiments, the pasty polyurethane composition has a viscosity at a shear rate of 1,5/s of at least 10 Pas, preferably at least 20 Pas, more preferably at least 30 Pas. In other embodiments, the pasty polyurethane composition has a viscosity at a shear rate of 1,5/s of at most 2000 Pas, preferably at most 1500 Pas, more preferably at most 1300 Pas. Preferably the pasty polyurethane composition has a viscosity at a shear rate of 1,5/s in the range from 10 to 2000 Pas, preferably from 20 to 1500 Pas, more preferably from 30 to 1300 Pas.

It is understood that the above viscosity factors that are, in various embodiments, preferred for the epoxy compositions disclosed herein may, in certain embodiments, replace the more general shear-thinning/thixotropy and yield stress definitions above. In other embodiments, all rheology requirements set out herein are satisfied by the epoxy compositions.

*Silanes* & *Silane-modified polymers*

In various embodiments, the polymeric compositions are based on silanes and/or silane-modified polymers. Such silane/silane-modified polymer compositions are typically moisture curable compositions.

In various embodiments, said compositions comprise at least one polymer having at least one terminal group of the general formula (I)

$$-A_n-R-SiXYZ \qquad (I),$$

wherein

A is a divalent bonding group containing at least one heteroatom,
R is selected from divalent hydrocarbon residues having 1 to 12 carbon atoms,
X, Y, Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting of a hydroxyl group, $C_1$ to $C_8$ alkoxy and $C_1$ to $C_8$ acyloxy groups, and
n is 0 or 1.

The polymers may have poly(organo)siloxane backbones or may be selected from polyethers, poly(meth)acrylic acid esters, or polyurethanes having the above-defined terminal silane groups to provide for moisture curing.

A "polyether" is understood to be a polymer in which the organic repeating units comprise ether functionalities C-O-C in the main chain. Polymers having lateral ether groups, such as cellulose ethers, starch ethers and vinyl ether polymers, as well as polyacetals such as polyoxymethylene (POM) are not included in the polyethers. The polyethers are preferably those described above in relation to the polyurethanes.

A "poly(meth)acrylic acid ester" is understood to be a polymer based on (meth)acrylic acid esters, which therefore has as a repeating unit the structural motif $-CH_2-CR^a(COOR^b)-$, where $R^a$ denotes a hydrogen atom (acrylic acid ester) or a methyl group (methacrylic acid ester) and $R^b$ denotes linear alkyl residues, branched alkyl residues, cyclic alkyl residues and/or alkyl residues comprising functional substituents, for example methyl, ethyl, isopropyl, cyclohexyl, 2-ethylhexyl or 2-hydroxyethyl residues.

The "polyurethanes" used as a backbone may be the polyurethanes described above.

The "polyorganosiloxanes" are preferably polydiorganosiloxanes, more preferably polydimethylsiloxanes. Preferably, an $\alpha,\omega$-dihydroxy-terminated polydiorganosiloxane, particularly an $\alpha,\omega$-dihydroxy-terminated polydimethylsiloxane is used as the polyorganosiloxane. Particularly preferred are $\alpha,\omega$-dihydroxy-terminated polydimethylsiloxanes,

which have a kinematic viscosity at 25°C of 5000 to 120,000 cSt, particularly 10,000 to 100,000 cSt, and particularly preferably 50,000 to 90,000 cSt.

The hydroxyl-functionalized polysiloxanes disclosed herein may possess a molecular weight (Mn) of from 500 to 150000 g/mol, preferably from 5000 to 100000, more preferably from 10000 to 100000. Moreover, the polymers may be characterized by a polydispersity index in the range from 1.0 to 5.0, preferably from 1.0 to 2.5.

Suitable hydroxyl terminated organopolysiloxanes may have the following structure:

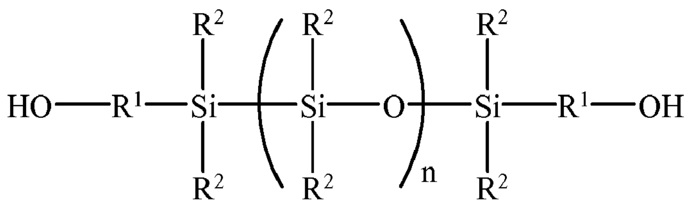

wherein each $R^1$ is independently chosen from $C_1$-$C_{12}$ alkyl, preferably $C_1$-$C_6$ alkyl, $C_2$-$C_{12}$ alkylether e.g. one or more O atoms between the C atoms, $C_3$-$C_6$ alicyclic and phenyl. Any $R^1$ can be independently substituted in any position by alkyl, alkoxy, halogen or epoxy moieties. Each $R^2$ is independently chosen from C1-C12 alkyl, preferably C1-C6 alkyl, C3-C6 alicyclic and phenyl. Any $R^2$ can be independently substituted in any position by alkyl, alkoxy, halogen or epoxy moieties. n can be an integer up to about 2,000, but n is more typically an integer from 1 to 200, preferably 5 to 200 and more preferably 10 to 150.

The divalent bonding group A comprising at least one heteroatom is understood to be a divalent chemical group which links the polymer backbone of the silane-terminated polymer with the residue R of the formula (I). For example, the divalent linking group A can be formed for example during the production of the alkoxysilane- and/or acyloxysilane-terminated polymer, for example as an amide or urethane group by the reaction of a polyether which is functionalized with hydroxy groups with an isocyanatosilane. In such an embodiment, A may have the structure -O-C(=O)-NH-. similar to Alternatively, a polyether with is terminated with hydroxyl groups may be first reacted with a polyisocyanate, such as a di- or triisocyanate, and the resulting NCO-terminated polymer may then be endcapped with aminosilanes. In such an embodiment, A may have the structure -O-C(=O)-NH-Alkyl/Aryl-NH-C(=O)-NH-. The divalent linking group can be either capable or incapable of being differentiated from structural features occurring in the underlying polymer backbone. The latter is the case, for example, if it is identical with the linking points of the repeating units of the polymer backbone.

The index "n" at each occurrence corresponds to 0 (zero) or 1. That means that A can be present (n=1) or absent (n=0), i.e. the divalent linking group A links the polymer backbone with the residue R (n = 1) or the polymer backbone is bound or linked directly with the residue R (n = 0). In the latter case, this means that A is a bond.

The divalent linking group A in the general formula (I) is preferably an oxygen atom or an -NR"- group, where R" is selected from the group consisting of a hydrogen atom, and alkyl or aryl residues having 1 to 12 carbon atoms, or is a substituted or unsubstituted amide, carbamate, urethane, urea, imino, siloxane, carboxylate, carbamoyl, amidino, carbonate, sulfonate or sulfinate group.

In various embodiments, the polymer backbone may be linked to R and the terminal groups of formula (I) via a moiety A selected from -O-C(=O)-NH-, -NH-C(=O)O- , -NH-C(=O)-NH-, -NR"-C(=O)-NH- , - NH-C(=O)-NR"- , -NH-C(=O)-, -C(=O)-NH - , -C(=O)-O-, -O-C(-O)-, -O-C(=O)-O-, -S-C(=O)-NH- , -NH-C(=O)-S- , -C(=O)-S-, -S-C(=O)-, -S-C(=O)-S- , -C(=O)-, -S-, -O-, and -NR"-, wherein R" can be hydrogen or a hydrocarbon moiety with 1 to 6 carbon atoms, optionally substituted with halogen, preferably $C_1$-$C_2$ alkyl or hydrogen. In such embodiments where A may consist of the afore-mentioned groups R may be a bivalent alkylene group having 1 to 10 carbon atoms, optionally interrupted by a heteroatom, that may be substituted, preferably $-CH_2-$ or $-(CH_2)_3-$. If such alkylene group is present, the full linker -A-R- can be -O-C(=O)-NH-$C_{1-10}$ alkylene- or -O-$C_{1-10}$ alkylene-.

Furthermore, the terminal groups of the polymer backbone, such as hydroxyl groups, may be first functionalized with a polyisocyanate, such as a diisocyanate or triisocyanate, such as those described above in relation to the polyurethanes, such that an NCO-terminated polymer is generated. This may then in the next step be reacted with an silane that comprises an NCO-reactive group, such as an amino or hydroxyl group, preferably an aminosilane. In such embodiments, A would then be a moiety of the structure -O-C(=O)-NR"-B-NR"-C(=O)-O-, with B being a hydrocarbon moiety, alkylene or arylene group, as defined herein, preferably with 1 to 12 carbon atoms, depending on the structure of the used polyisocyanate.

Accordingly, in various embodiments, A may comprise two moieties selected from -O-C(=O)-NH-, - NH-C(=O)O- , -NH-C(=O)-NH-, -NR"-C(=O)-NH- , -NH-C(=O)-NR"- , -NH-C(=O)-, -C(=O)-NH - , - C(=O)-O-, -O-C(-O)-, -O-C(=O)-O-, -S-C(=O)-NH- , -NH-C(=O)-S- , -C(=O)-S-, -S-C(=O)-, -S-C(=O)-S-, -C(=O)-, -S-, -O-, and -NR"-, wherein R" can be hydrogen or a hydrocarbon moiety with 1 to 6 carbon atoms, optionally substituted with halogen, preferably $C_1$-$C_2$ alkyl or hydrogen, with these two moieties being linked by a linking group. The linking group may be B, as defined above.

Particularly preferred as linking group A are urethane and urea groups, which can be obtained by reacting certain functional groups of a prepolymer with an organosilane which carries a further functional group. Urethane groups can be formed, for example, either when the polymer backbone comprises terminal hydroxy groups and isocyanatosilanes are used as a further component, or conversely when a polymer having terminal isocyanate groups is reacted with an alkoxysilane comprising terminal hydroxy groups. Similarly, urea groups can be obtained if a terminal primary or secondary amino group - either on the silane or on the polymer - is used, which reacts with a terminal isocyanate group that is present in the respective reactant. This means that either an aminosilane is reacted with a polymer having terminal isocyanate groups or a polymer that is terminally substituted with an amino group is reacted with an isocyanatosilane. As described above, A may comprise two of these functional groups, i.e. two urethane groups, two urea groups or one urethane and one urea group, depending on the chemistry used for linking the silane groups to the polymer backbone.

Urethane and urea groups advantageously increase the strength of the polymer chains and of the overall crosslinked polymer.

The residue R is a divalent hydrocarbon residue having 1 to 12 carbon atoms. The hydrocarbon residue can be a linear, branched or cyclic alkylene residue. The hydrocarbon residue can be saturated or unsaturated. R is preferably a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R is a methylene, ethylene or n-propylene group, in particular a methylene or n-propylene residue.

Alkoxysilane-terminated compounds having a methylene group as binding link to the polymer backbone - so-called "alpha-silanes" - have a particularly high reactivity of the terminating silyl group, leading to reduced setting times and thus to very rapid curing of formulations based on these polymers.

In general, a lengthening of the binding hydrocarbon chain leads to reduced reactivity of the polymers. In particular, "gamma-silanes" - which comprise the unbranched propylene residue as binding link - have a balanced ratio between necessary reactivity (acceptable curing times) and delayed curing (open assembly time, possibility of corrections after bonding). By carefully combining alpha- and gamma-alkoxysilane-terminated building blocks, therefore, the curing rate of the systems can be influenced as desired.

Within the context of the present invention, R is most particularly preferably an n-propylene group.

The substituents X, Y and Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein at least one of the substituents X, Y, Z here must be a hydrolyzable group, preferably a $C_1$ to $C_8$ alkoxy or a $C_1$ to $C_8$ acyloxy group, wherein the substituents X, Y and Z are directly bound with the Si atom or the two of the substituents X, Y, Z form a ring together with the Si atom to which they are bound. In preferred embodiments, X, Y and Z are the substituents directly bound with the SI atom. As hydrolyzable groups, preferably alkoxy groups, in particular methoxy, ethoxy, i-propyloxy and i-butyloxy groups, are selected. This is advantageous, since no substances which irritate mucous membranes are released during the curing of compositions comprising alkoxy groups. The alcohols formed by hydrolysis of the residues are harmless in the quantities released, and evaporate. However, acyloxy groups, such as an acetoxy group $-O-CO-CH_3$, can also be used as hydrolyzable groups.

In preferred embodiments, the alkoxy- and/or acyloxysilane-terminated polymer(s) has/have at least two terminal groups of the general formula (I). Each polymer chain thus comprises at least two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolyzable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that *inter alia* the elasticity, flexibility and heat resistance of the finished crosslinked compositions can be influenced in this way.

In preferred embodiments, in the general formula (I), X is preferably an alkyl group and Y and Z are, each independently of one another, an alkoxy group, or X, Y and Z are, each independently of one another, an alkoxy group. In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups.

With trialkoxysilyl groups, on the other hand, a higher degree of crosslinking can be achieved, which is particularly advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding adhesive under the influence of force and possibly temperature.

Particularly preferably, the substituents X, Y and Z in the general formula (I) are, each independently of one another, selected from a hydroxyl, a methyl, an ethyl, a methoxy or an ethoxy group, at least one of the substituents

being a hydroxyl group, or a methoxy or an ethoxy group, preferably a methoxy group. Methoxy and ethoxy groups as comparatively small hydrolyzable groups with low steric bulk are very reactive and thus permit a rapid cure, even with low use of catalyst. They are therefore of particular interest for systems in which rapid curing is desirable.

Interesting configuration possibilities are also opened up by combinations of the two groups. If, for example, methoxy is selected for X and ethoxy for Y within the same alkoxysilyl group, the desired reactivity of the terminating silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolyzable groups, which by nature exhibit lower reactivity. This is of particular interest if delayed curing is also to be achieved by means of the configuration of the alkoxy groups.

The total proportion of the polymers with at least one silicone-containing group, preferably at least one end group, of the general formula (I) in the printable composition is preferably 10 to 90 wt.% based on the total weight of the curable composition.

*Radiation and radiation/moisture curable polymers*

The printable compositions may, in various embodiments, comprise radiation curable polymers. These may be selected from the polymers described above and may, in various embodiments, comprise at least one terminal group of the general formula (II)

$$-A^1-C(=O)-CR^1=CH_2 \qquad (II),$$

wherein

$A^1$ is a divalent bonding group containing at least one heteroatom; and
$R^1$ is selected from H and $C_1$-$C_4$ alkyl, preferably H and methyl.

In various embodiments, the polymer backbone of such polymers is selected from the group consisting of polyurethanes, polyethers/polyoxyalkylenes, poly(meth)acrylates, polyesters, polyorganosiloxanes and combinations thereof, as described above.

The presence of the terminal acrylic groups of formula (II) imparts the polymer with radiation curing properties.

To obtain dual radiation/moisture curing properties, the radiation curable polymer can further comprise at least one terminal group of the general formula (III)

$$-A^2-SiXYZ \qquad (III),$$

wherein X, Y, Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting of a hydroxyl group, $C_1$ to $C_8$ alkoxy and $C_1$ to $C_8$ acyloxy groups; and
$A^2$ is a divalent bonding group containing at least one heteroatom.

In various embodiments, the radiation curable polymer may comprise at least two, for example 2 or 3 or 4 or more terminal groups of the general formula (II). In addition to these, the polymer may further comprise at least one terminal group of formula (III), for example 1, 2 or more. In various embodiments, the polymer may comprise at least one terminal group of formula (II), for example 1, 2 or 3, and at least one terminal group of formula (III), for example 1, 2 or 3. In some embodiments, the polymer is a linear polymer and thus comprises only two terminal groups. These may be of formula (II) or formula (II) and formula (III).

In various embodiments, the radiation curable polymer of the invention comprises 1 to 100 mol-%, preferably 50 to 100 mol-%, of terminal groups of formula (II) and 99 to 0 mol-%, preferably 50 to 0 mol-%, of terminal groups of formula (III). In a linear polymer having one terminal group of formula (II) and one terminal group of formula (III), the mol-% of both groups would thus be 50%. In various embodiments, it may be advantageous that both types of terminal groups are present, as this imparts dual curing properties to the polymer. This is advantageous, as the radiation curing provides a fast curing mechanism important for stability of the printed object directly after printing and the moisture curing provides for a slower curing mechanism that provides the object with the final properties, such as hardness and elasticity. While it is possible to indicate the number of terminal groups of each formula for a single polymer molecule, it is understood

that, depending on the process of manufacture, the obtained population of polymers may vary in their structure with regard to the terminal groups, as it may be possible that such a process generates polymer molecules that have only terminal groups of formula (II), polymer molecules that have only terminal groups of formula (III) and polymer molecules that have both types of terminal groups. In such polymer compositions, the above given percentages regarding the percentage of the respective terminal groups still apply but then relate to the total number of terminal groups in the given population of polymer molecules.

Accordingly, in various embodiments, the radiation curable polymer comprises (i) two or three, preferably two, terminal groups of formula (II) or (ii) one terminal group of formula (II) and one or two, preferably one, terminal group of formula (III), or (iii) two terminal groups of formula (II) and one terminal group of formula (III). Preferably, the polymer is a linear polymer.

In various embodiments, at least one polymer A comprising at least one terminal group of formula (II) may be combined with a second polymer, this at least one second polymer B comprising at least one terminal group of formula (III). The polymer backbone of this at least one polymer B may also be selected from the same group listed above for polymer A, but is independent from the backbone of the polymer A. However, in various embodiments if two different polymers A and B are used in the composition, the backbones may be the same type of polymer backbone. In various embodiments, both polymers have polyether backbones. In other, alternative embodiments, the at least one polymer B has a backbone different from those listed above, such as a polysiloxane backbone, for example a polydimethylsiloxane (PDMS) backbone.

In various embodiments, the divalent linking group $A^1$ and/or $A^2$ comprises a substituted or unsubstituted ether, amide, carbamate, urethane, urea, imino, siloxane, carboxylate, carbamoyl, amidino, carbonate, sulfonate or sulfinate group, preferably a urea and/or urethane group. "Substituted" in relation to these groups means that a hydrogen atom present in these groups may be replaced by a non-hydrogen moiety, such as alkyl, for example $C_{1-4}$ alkyl. While $A^1$ and/or $A^2$ may be any one of the listed groups, in various embodiments, they comprise further structural elements, such as further linking groups that link the listed functional group to the polymer and/or the terminal group.

Generally, in various embodiments, the linking groups $A^1$ and $A^2$ are generated in a capping reaction in which the polymer termini are reacted with a compound results in the terminal groups of formulae (I) and (II). In various embodiments, the polymers are provided in a hydroxyl (OH) terminated form and thus provide reactive groups on their termini that can be used for the capping reaction. In various embodiments, the terminal groups of the polymer backbone, such as hydroxyl groups, may be first functionalized with a polyisocyanate, such as a diisocyanate or triisocyanate, such as those described above, such that an NCO-terminated polymer is generated. This may then in the next step be reacted with an (meth)acrylate/silane that comprises an NCO-reactive group, such as an amino or hydroxyl group, preferably an hydroxy-modified (meth)acrylate and/or an aminosilane. The urethane and urea groups resulting from such a reaction, advantageously increase the strength of the polymer chains and of the overall crosslinked polymer.

With respect to the terminal silane group of formula (III), the same preferred embodiments as described above for the silane and SMPs apply.

*Fillers*

All printable compositions described herein may comprise at least one filler. The at least one filler, may, without limitation, be selected from chalk, powdered limestone, silica, such as precipitated and/or pyrogenic silica, zeolites, bentonites, magnesium carbonate, kieselguhr, alumina, clay, tallow, titanium oxide, iron oxide, zinc oxide, sand, quartz, flint, mica, powdered glass and other ground minerals. In preferred embodiments, the filler(s) are precipitated and/or pyrogenic silica. Furthermore, organic fillers can also be used, in particular carbon black, graphite, wood fibers, wood flour, sawdust, cellulose, cotton, pulp, wood chips, chopped straw, chaff, ground walnut shells and other short-cut fibers. Furthermore, short fibers such as glass fibers, glass filament, polyacrylonitrile, carbon fibers, Kevlar fibers or polyethylene fibers can also be added. Aluminum powder is also suitable as a filler. In addition, hollow spheres with a mineral shell or a plastic shell are suitable as fillers. These can be e.g. hollow glass spheres which are commercially available with the trade names Glass Bubbles®. Plastic-based hollow spheres are commercially available, e.g. with the names Expancel® or Dualite®. These are composed of inorganic or organic substances, each with a diameter of 1 mm or less, preferably of 500 $\mu$m or less. Generally, fillers which make the preparations thixotropic are preferred. These fillers are also described as rheological auxiliaries.

The filler(s) are preferably used in a quantity of 1 to 90 wt.%, for example 5 to 30 wt.%, based on the total weight of the composition according to the invention. An individual filler or a combination of several fillers can be used.

In various embodiments, the filler comprises silica. For example, a highly disperse silica with a BET surface area (DIN ISO 9277; DIN 66132) of 10 to 500 $m^2/g$ can be used as a filler. The use of such a silica may contribute to reinforcing the hardened preparation. By means of this reinforcement, for example the initial strengths and tensile shear strengths of the hardened composition may be improved. Preferably, coated silicas with a BET surface area of 100 to 400, more preferably 100 to 300, in particular 150 to 300 and most particularly preferably 160 to 300 $m^2/g$, are used.

Suitable silicas are for example commercially available from Wacker under the tradename HDK®, including HDK® H18.

In various embodiments, the filler comprises chalk (calcium carbonate), optionally surface coated with fatty acids. Cubic, non-cubic, amorphous and other modifications of calcium carbonate can be used as chalk. Preferably, the chalks used are surface treated or coated. As a coating agent, preferably fatty acids, fatty acid soaps and fatty acid esters are used, for example lauric acid, palmitic acid or stearic acid, sodium or potassium salts of such acids or their alkyl esters. In addition, however, other surface-active substances, such as sulfate esters of long-chain alcohols or alkylbenzenesulfonic acids or their sodium or potassium salts or coupling reagents based on silanes or titanates, are also suitable. The surface treatment of chalks is often associated with an improvement in processability and adhesive strength and also the weathering resistance of the compositions.

Depending on the desired property profile, precipitated or ground chalks or mixtures thereof can be used. Ground chalks can be produced, for example, from natural lime, limestone or marble by mechanical grinding, using either dry or wet methods. Depending on the grinding method, fractions having different average particle sizes can be obtained. Advantageous specific surface area values (BET) are between 1.5 $m^2/g$ and 50 $m^2/g$.

In preferred embodiments, chalk and/or silica, for example both, are used as fillers.

If used, zeolites, preferably alkali aluminosilicates are used, for example sodium-potassium aluminosilicates of the general empirical formula $aK_2O*bNa_2O*Al_2O_3*2SiO*nH_2O$ with $0 < a, b < 1$ and $a + b = 1$. The pore opening of the zeolite or zeolites used is just large enough to accept water molecules. Accordingly, an effective pore opening of the zeolites of less than 0.4 nm is preferred. Particularly preferably, the effective pore opening is 0.3 nm $\pm$ 0.02 nm. The zeolite(s) is/are preferably used in the form of a powder.

*Condensation catalysts*

The printable compositions according to the invention may further comprise at least one condensation catalyst. The at least one condensation catalyst serves as a curing catalyst for the polymers.

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Also suitable are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, $(n\text{-butyl})_2Sn(SCH_2COO)$, $(n\text{-octyl})_2Sn(SCH_2COO)$, $(n\text{-octyl})_2Sn(SCH_2CH_2COO)$, $(n\text{-octyl})_2Sn(SCH_2CH_2COOCH_2CH_2OCOCH_2S)$, $(n\text{-butyl})_2\text{-}Sn(SCH_2COO\text{-}i\text{-}C_8H_{17})_2$, $(n\text{-octyl})_2Sn(SCH_2COO\text{-}i\text{-}C_8H_{17})_2$, and $(n\text{-octyl})_2Sn(SCH_2COO\text{-}n\text{-}C_8H_{17})_2$.

In some embodiments, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

In various embodiments, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions contain the curing catalyst preferably in an amount of from about 0.01 to 1.0 % by weight, preferably 0.1 to 1.5 % by weight, based in each case on the total weight of the composition. If a mixture of different catalysts is used, the amounts refer to the total amount in the composition.

*Photoinitiators*

The printable compositions may further comprise at least one catalyst for promoting the crosslinking of radiation curable terminal groups, such as (meth)acrylate terminal groups, if present. The at least one catalyst may then be a photoinitiator. Photoinitiators may be radical or cationic photoinitiators. Suitable compounds are well-known in the art and include, without limitation, benzoin ethers, such as benzoin methyl ether and benzoin isopropyl ether, substituted acetophenones, such as 2,2-diethoxyacetophenon (commercially available under the tradename Irgacure 651® from BASF SE), 2,2-dimethoxy-2-phenyl-1-phenylethanone, dimethoxyhydroxyacetophenone, substituted $\alpha$-ketols, such as 2-methoxy-2-hydroxypropiophenone, aromatic sulfonylchlorides, such as 2-naphthyl sulfonyl chloride, and photoaktive oximes, such as 1-phenyl-1,2-propandion-2-(O-ethoxycarbonyl)oxime. The mentioned and further suitable photoinitiators can comprise the following residues: benzophenone-, acetophenone-, benzile-, benzoin-, hydroxyalkylphenone-, phenylcyclohexylketone-, anthrachinon-, trimethylbenzoylphosphinoxide-, methylthiophenylmorpholinketone-, aminoketone-, azobenzoin-, thioxanthon-, hexarylbisimidazole-, triazin-, or Fluorenone, wherein each of these residues may additionally be substituted with one or more halogen atoms and/or one or more alkoxy groups and/or one or more amino or hydroxy groups. An overview over suitable photoinitiators can be found in Fouassier: "Photoinititation, Photopolymerization and Photocuring: Fundamentals and Applications", Hanser-Verlag, München 1995. In addition, reference is made to Carroy et al. in "Chemistry and Technology of UV and EB Formulation for Coatings, Inks and Paints", Oldring (Hrsg.), 1994, SITA, London. Specific examples of suitable compounds include, without limitation, oxyphenyl acetic acid ester based initiator and ethyl (2,4,6-trimethylbenzoyl)-phenyl-phosphinate.

The compositions contain the photoinitiators preferably in an amount of from about 0.01 to 5.0 % by weight, preferably 0.1 to 4.0 % by weight, more preferably 0.5 to 3 % by weight, based in each case on the total weight of the composition. If a mixture of different photoinitiators is used, the amounts refer to the total amount in the composition.

*Core-shell particles*

In some embodiments, the printable compositions, such as the epoxy or polyurethane compositions described herein, may further comprise core-shell particles, especially core-shell rubbers (CSRs). These core-shell particles can be used to improve the mechanical properties of the printed part, especially the toughness. In principle all known core-shell particles could be used.

In various embodiments of the invention the core-shell rubbers can be dispersed in a resin matrix, in particular an epoxy resin matrix. The epoxy resin matrix can be chosen from the above described epoxy resins, in particularly preferred embodiments, the epoxy resin matrix for the CSR is similar to the used epoxy resin for the printable composition, e.g. a cycloaliphatic epoxy resin as matrix resin in case the printable compositions contains a cycloaliphatic epoxy resin. If the core-shell rubbers are present in an epoxy resin matrix, the amount of epoxy resin counts towards the proportion of the total epoxy resins in the composition. In various embodiments the polymer, which forms the shell of the core-shell rubber, has a sufficient affinity for the epoxy resin used as matrix and/or base resin, such that the core-shell rubber particles are present in the epoxy resin as primary particles, dispersed in a stable manner.

In preferred embodiments, both the core and the shell of the core-shell rubber consists of a polymer having glass transition temperatures preferably less than 0°C, preferably -30°C or lower. The glass transition temperature can be determined by means of DSC (in accordance with DIN EN ISO 11357 at a heating rate of 10°C/min). The core-shell rubber particles preferably have a size of 0.03 to 50 $\mu$m, particularly preferably 1 to 20 $\mu$m, even more particularly preferably of less than 5 $\mu$m. A core-shell rubber particle usually even has an average diameter of just 500 nm or less than 200 nm, i.e. approximately 25 to 22 nm or 50 to 150 nm.

The core material of a CSR preferably consists of a diene homopolymer or a copolymer having elastomeric properties, such as a homopolymer of butadiene or isoprene, a copolymer of butadiene or isoprene with one or more ethylenically unsaturated monomer(s), such as vinyl aromatic monomer(s), (meth)acrylonitrile and/or (meth)acrylate. Preferred polymers as core material are selected from polybutadiene, polybutyl acrylate, polydimethylsiloxane, polyacrylates, polymethacrylates, poly(meth)acrylic acids and poly(meth)acrylic esters and co- or terpolymers thereof with

polystyrene, polyacrylonitrile or polysulfide, more particularly preferably from polybutadiene, polydimethylsiloxane or polybutyl acrylate. Elastomeric polysiloxanes, such as polydimethylsiloxane or crosslinked polydimethylsiloxane, are also suitable as core material. The diene homo- and copolymers already disclosed above as core material are preferably also used as shell material.

If a polymer or a copolymer not having elastomeric properties (preferably a thermoplastic or thermoset/crosslinking polymer) is to be used as shell material, polymers of this type are selected for example from polystyrene, poly(meth)acrylamide, polyacrylonitrile, polyacrylate mono-, co- or terpolymers, polymethacrylate mono-, co- or terpolymers or styrene/acrylonitrile/glycidyl methacrylate terpolymers, or from a polymer or a copolymer from among one or more monomers of unsaturated acids and anhydrides (for example acrylic acid).

The core-shell rubber particles can consist of a number of layers, for example more than two layers. A CSR of this type preferably has a central core, which consists of a first diene homopolymer or copolymer having elastomeric properties, which is enclosed by a second core formed from a second (different) diene homopolymer or copolymer, likewise having elastomeric properties.

In various embodiments of the present invention the used CSRs have a core and at least two concentric shells having different chemical compositions and/or properties. Particles which have a core formed from polybutadiene and a shell formed from polybutadiene, polystyrene or a polybutadiene-polystyrene copolymer are preferred. Suitable CSRs are commercially obtainable for example from Kaneka and are present in the form of phase-separated particles dispersed in epoxy resins. These particles have a core formed from a copolymer of (meth)acrylate-butadiene-styrene, wherein butadiene is the primary component of the copolymer. Further commercially obtainable masterbatches of core-shell rubber particles dispersed in epoxy resins are, for example, the product Genioperl M23A from Wacker (a dispersion of 30 wt% CSR in an aromatic epoxy resin based on bisphenol A diglycidyl ether; the CSRs have an average diameter of approximately 100 nm and contain a core formed from elastomeric crosslinked silicone, onto which an epoxy-functional acrylate copolymer has been grafted).

In various embodiments, the printable composition preferably contains 1 to 15 wt.%, preferably 2 to 10 wt.%, based on the total weight of the printable composition, of at least one of the above-described core-shell rubbers.

*Additives*

The composition according to the invention may comprise further ingredients in addition to the components mentioned above, which can contribute to imparting the cured materials with the desired properties.

These include, in principle, all additives known in the prior art and conventional additional ingredients. Such additional ingredients include, but are not limited to, adhesion promoters, surfactants, plasticizers, diluents, reactive diluents, flow agents, coupling agents, wetting agents, flame retardants, preservatives, stabilizers, defoaming agents, pigments, dyes, moisture scavengers, crosslinking agents, blowing agents, conductivity imparting agents and light/UV stabilizers. If the composition is radiation, such as UV curable, the additional components should preferably be non-radiation (UV) absorbing. The additives are preferably present in an amount of less than 20 % by weight, in particular less than 10 % by weight, preferably less than 5 % by weight, in each case based on the total printable composition.

## Claims

1. Method for additive manufacturing a three-dimensional part in a layer-by-layer manner, wherein the method comprises

   (i) providing a carrier substrate to support the three-dimensional part and a print head connected to a reservoir of a printable composition;
   (ii) printing the printable composition with the print head in form of extrudate strands onto the carrier substrate, wherein the distance of the print head orifice to the carrier substrate is equal to or greater than the thickness of the printed extrudate strand, to form a first layer;
   (iii) printing the printable composition with the print head in form of extrudate strand onto the first layer, wherein the distance of the print head orifice to the first layer is equal to or greater than the thickness of the printed extrudate strand, to form a second layer; and
   (iv) optionally repeating step (iii) at least once to form a third or subsequent layer.

2. The method of claim 1, wherein the distance of the print head orifice to the carrier substrate or the already formed layers during printing is greater than the thickness of the printed extrudate strand.

3. The method of claim 1 or 2, wherein the ratio of the distance of the print head orifice to the carrier substrate or the

already formed layers during printing to the thickness of the printed extrudate strand ranges from 1.0 to 3.0, preferably 1.0 to 2.0, more preferably 1.1 to 1.8.

**4.** The method of any one of the preceding claims, wherein the printable composition is curable and the method further includes curing the printed layers.

**5.** The method of claim 4, wherein the curing mechanism is selected from UV irradiation, moisture, heat or combinations thereof.

**6.** The method of any one of claims 4-5, wherein the printable composition comprises a polymer base material selected from the group consisting of epoxides, polyurethanes, acrylates, silanes and silane-modified polymers and combinations thereof.

**7.** The method of claim 6, wherein the printable composition comprises an epoxide base material.

**8.** The method of any one of the preceding claims, wherein the printable composition is in form of a printable paste.

**9.** The method of claim 8, wherein the printable paste is a thixotropic and/or shear-thinning liquid composition having a yield point, the yield stress being preferably at least 25, more preferably at least 50, most preferably at least 75.

**10.** The method of any one of the preceding claims, wherein the printhead orifice is an extruder die.

**11.** Three-dimensional article manufactured by use of the method of any one of the preceding claims.

European Patent Office

# EUROPEAN SEARCH REPORT

Application Number
EP 19 17 4141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 409 452 A1 (MITSUBISHI GAS CHEMICAL CO [JP]) 5 December 2018 (2018-12-05)<br>* figures 1-6 *<br>* paragraph [0044] - paragraph [0088] *<br>----- | 1-11 | INV.<br>B29C64/118<br>B33Y30/00<br>B33Y70/00 |
| X | US 2017/015059 A1 (LEWICKI JAMES [US]) 19 January 2017 (2017-01-19)<br>* figure 4 *<br>----- | 1-11 | |
| X | US 2017/015061 A1 (LEWICKI JAMES [US] ET AL) 19 January 2017 (2017-01-19)<br>* figures 1-2 *<br>----- | 1-11 | |
| X | US 2018/251649 A1 (LEWIS JENNIFER A [US] ET AL) 6 September 2018 (2018-09-06)<br>* figure 1 *<br>* paragraph [0035] *<br>----- | 1-11 | |
| X | US 2018/079135 A1 (DUIS PATRICK GERARDUS [NL] ET AL) 22 March 2018 (2018-03-22)<br>* figure 1 *<br>* paragraphs [0045], [0054] *<br>----- | 1-11 | TECHNICAL FIELDS SEARCHED (IPC) |
| X | US 2016/185050 A1 (TOPOLKARAEV VASILY A [US] ET AL) 30 June 2016 (2016-06-30)<br>* figure 1 *<br>* paragraphs [0042], [0043] *<br>----- | 1-11 | B29C<br>B33Y |

The present search report has been drawn up for all claims

2

| Place of search | Date of completion of the search | Examiner |
|---|---|---|
| The Hague | 15 October 2019 | Sacepe, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 19 17 4141

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2019

| Patent document cited in search report | Publication date | Patent family member(s) | Publication date |
|---|---|---|---|
| EP 3409452 A1 | 05-12-2018 | CA 3011927 A1 | 27-07-2017 |
| | | CN 108472866 A | 31-08-2018 |
| | | EP 3409452 A1 | 05-12-2018 |
| | | JP 6251925 B2 | 27-12-2017 |
| | | JP 2017128072 A | 27-07-2017 |
| | | KR 20180105650 A | 28-09-2018 |
| | | TW 201739600 A | 16-11-2017 |
| | | WO 2017126476 A1 | 27-07-2017 |
| US 2017015059 A1 | 19-01-2017 | NONE | |
| US 2017015061 A1 | 19-01-2017 | NONE | |
| US 2018251649 A1 | 06-09-2018 | US 2018251649 A1 | 06-09-2018 |
| | | WO 2017095773 A1 | 08-06-2017 |
| US 2018079135 A1 | 22-03-2018 | CN 107405830 A | 28-11-2017 |
| | | EP 3268211 A1 | 17-01-2018 |
| | | JP 2018507798 A | 22-03-2018 |
| | | KR 20170123636 A | 08-11-2017 |
| | | US 2018079135 A1 | 22-03-2018 |
| | | WO 2016142472 A1 | 15-09-2016 |
| US 2016185050 A1 | 30-06-2016 | AU 2014304190 A1 | 03-03-2016 |
| | | BR 112016002263 A2 | 01-08-2017 |
| | | CN 105408093 A | 16-03-2016 |
| | | EP 3030402 A1 | 15-06-2016 |
| | | JP 2016532579 A | 20-10-2016 |
| | | KR 20160042073 A | 18-04-2016 |
| | | RU 2016107779 A | 12-09-2017 |
| | | SG 11201601712Q A | 28-04-2016 |
| | | US 2016185050 A1 | 30-06-2016 |
| | | WO 2015019212 A1 | 12-02-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994